# EUROPEAN PATENT APPLICATION

(11) **EP 1 243 685 A2**
(43) Date of publication of application: **25.09.2002**
(21) Application number: 02002130.9
(22) Date of filing: 29.01.2002
(51) Int. Cl.: D06F 37/20, F16F 7/09

(54) **Differential-type shock-absorber strut, in particular for washing machines**

(30) Priority: 20.03.2001 IT PN010012 U
(71) Applicant: GRUSAN di SANDRIN Giannino & C. s.a.s., 33080 Porcia (IT)
(72) Inventor: Sandrin, Giannino, 33080 Porcia, Pordenone (IT)
(74) Representative: Busca, Luciano

(57) **Abstract**

Differential-type shock-absorber strut comprising a cylinder (7), in which a piston (9) is provided slidably under interposition of a main friction member (12) and further friction members (18; 19). The main friction member (12) is firmly joined axially with said piston (9) so as to make friction against said cylinder (7), and said further friction members (18; 19) are mounted on said piston (9), axially aligned with said main friction member (12), in a freely slidable manner with respect to the piston (9) along respective axial lengths (A; B), so as to be able to make friction against the cylinder (7), in series with said main friction member (12), solely when the piston (9) is caused to displace with respect to the cylinder (7) by an axial length exceeding a pre-determined value.

## Description

The present invention refers to a differential-type shock-absorber strut, ie. a shock absorber that is adapted to exert, in response to mechanical oscillations applied to the component parts thereof, a braking action that varies in accordance with the amplitude of the oscillations themselves.

Differential shock-absorber struts of this kind are typically used in such applications as clothes washing machines and, in the preferred embodiment thereof, are of a solely mechanical type, since they so prove much more reliable and economical as compared for instance with shock-absorber struts based on the use of magneto-rheological or similar fluids, with associated actuation and control devices.

Differential-type shock-absorber struts of the mechanical type comprise a piston that is adapted to slide within a cylinder under interposition of two friction members that are adapted to exert different friction actions and be actuated successively.

As described for instance in EP-A-0 301 190, a first friction member is mounted directly on the piston and co-operates with the inner surface of a sleeve that is in turn adapted to slide within the piston under interposition of the second friction member. In accordance with the amplitude of the oscillations being applied between the cylinder and the piston, the braking action exerted by the shock-absorber strut is determined by the two friction members in a sequence.

These prior-art solutions, however, are not fully satisfactory, actually, since they have some quite significant disadvantages deriving mainly from their relatively complex structure:
- the main component parts thereof are substantially concentric and have a relatively complicated shape, so that their assembly turns out to be quite critical and laborious and, therefore, definitely expensive on an industrial scale;
- the concentric arrangement of said component parts imparts a relatively bulky diametrical size to such differential-type shock-absorber struts, notwithstanding the fact that it would rather be most desirable for such a size to be reduced to properly fit the application;
- the above mentioned bulky diametrical size, along with the above mentioned construction complexity, practically prevent the shock-absorber strut to be made in such a manner as to be able to exert a differential braking action with a plurality of different intervention levels. This, on the contrary, would prove very desirable in many applications, such as for instance in clothes washing machines, in view of being able to be ensured a damping effect that varies precisely, and therefore effectively, in accordance with or in response to the different conditions of operation.

It therefore is a main purpose of the present invention to provide a differential-type shock-absorber strut, in particular for clothes washing machines, which not only has a particularly simple, compact, reliable and low-cost structure, but is also capable of effectively exerting a differential braking action with a plurality of different intervention levels fitting the most varied operating conditions.

According to the present invention, this aim is reached in a differential-type shock-absorber strut, in particular for application in clothes washing machines, having the characteristics as recited in the appended claims.

Anyway, features and advantages of the present invention will be more readily understood from the description that is given below by way of non-limiting example with reference to the accompanying drawings, in which:
- Figures 1 and 2 are schematic views of respective clothes washing machines incorporating shock-absorber struts according to the present invention;
- Figure 3 is a schematic, longitudinal sectional view of a preferred embodiment of the shock-absorber strut according to the present invention;
- Figures 4 to 7 are enlarged views of a detail of the shock-absorber strut of Figure 3, in respective operating positions thereof.

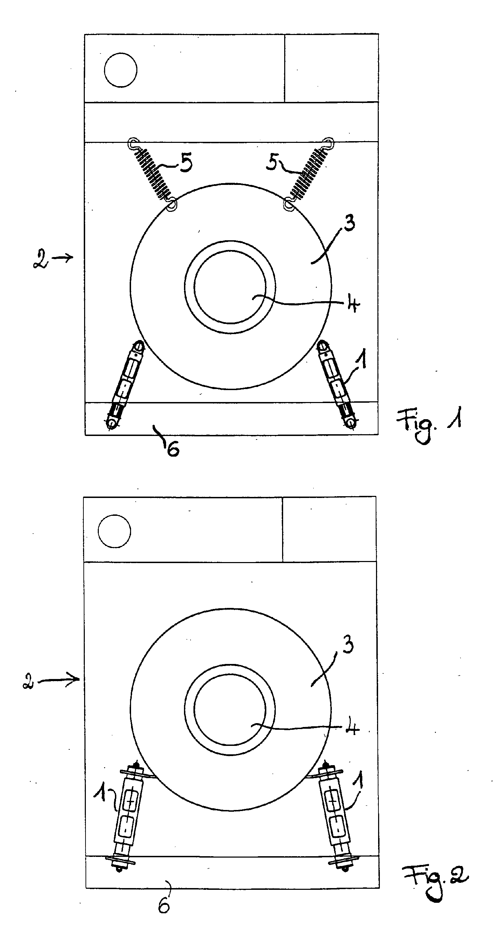

With particular reference to Figures 1 and 2, a pair of shock-absorber struts 1 according to the present invention can be used in particular in a clothes washing machine 2 comprising a suspended washing assembly 3 of the type including a rotating drum 4.

In the example shown in Figure 1, said suspended washing assembly 3 is suspended inside the washing machine by means of upper springs 5, as well as by means of the shock-absorber struts 1, which connect the lower side of said suspended washing assembly 3 to the base 6 of the same washing machine.

In the example shown in Figure 2, the suspended washing assembly 3 is suspended inside the washing machine solely by means of a pair of lower shock-absorber struts 1, which in this case are of the so-called "spring-foot" type, ie. incorporating also a spring (not shown) similar to the spring 5 of Figure 1.

Referring now also to Figures 3 to 7, which for reasons of greater simplicity illustrate a shock-absorber strut 1 of the type that does not incorporate a spring, said shock-absorber strut can be noticed to mainly comprise a cylinder 7 with a sealed end portion in correspondence of which there is provided an eyelet 8, or the like, for attachment to the suspended washing assembly 3 (or to the base 6 of the washing machine).

In the cylinder 7 there is slidably provided a piston 9, which has an end portion 10 that protrudes outside of the same cylinder and is provided with an eyelet 11, or the like, for attachment to the base 6 of the washing machine (or to the suspended washing assembly 3).

Around the piston 9 there is mounted, firmly joined axially thereto, at least a main friction member 12 adapted to make friction with respect to the side inner surface 13 of the cylinder 7. For instance, such a friction member 12 may be substantially in the shape of a ring and may be retained axially between two mutually opposing shoulders 14 and 15 of the piston 9.

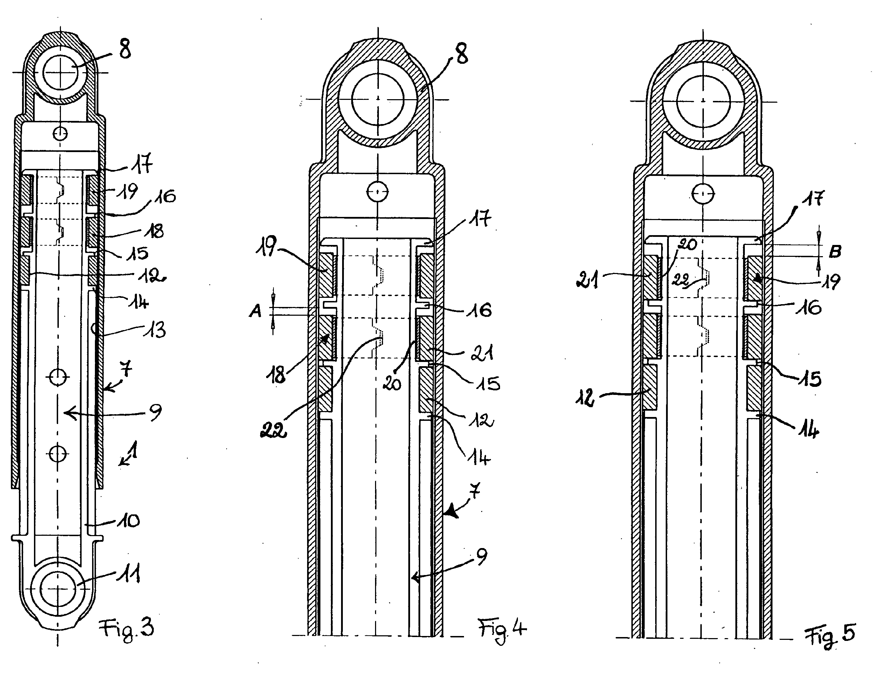

Around the piston 9 there is further mounted, axially aligned with said friction member 12, at least another friction member 18, which is adapted to make friction with respect to the surface 13 of the cylinder 7. Unlike the friction member 12, however, the friction member 18 is provided so as to be freely slidable with respect to the piston 9 along an axial length A thereof (Figure 4) that is defined by two mutually opposing shoulders 15 and 16 of the same piston.

The friction member 18 is preferably made with a substantially ring-shaped composite structure comprising an inner layer 20 of a self-lubricating material (such as for instance an acetal resin, polypropylene, or the like) and an outer layer 21 (made for instance of polyurethane foam) capable of making friction with respect to the surface 13 of the cylinder 7.

The friction member 18 has substantially the same outside diameter as the friction member 12 and, owing to the afore described composite structure thereof, it is elastically compliable, ie. capable of deforming elastically. This advantageously enables the same friction member 18 to be made with a toroidal (or partially toroidal) contour which is split, ie. interrupted in correspondence, for instance, of a mating border 22. As a result, the ring-shaped friction member 18 is capable of being quite quickly and conveniently assembled transversally in position on the piston 9 through a simple, elementary elastic opening-out and passing-over, ie. snapping-in operation.

Preferably, furthermore, the outer layer 21 of the friction element 18 protrudes axially on both sides with respect to the inner layer 20. As a result, the layer 21, which is made of a soft material, is capable of advantageously damping the friction member 18 striking against the shoulders 15, 16 and the operation of the whole shock-absorber strut is in all cases particularly noiseless.

In any case, around the piston 9 there may be mounted a plurality of additional friction members.

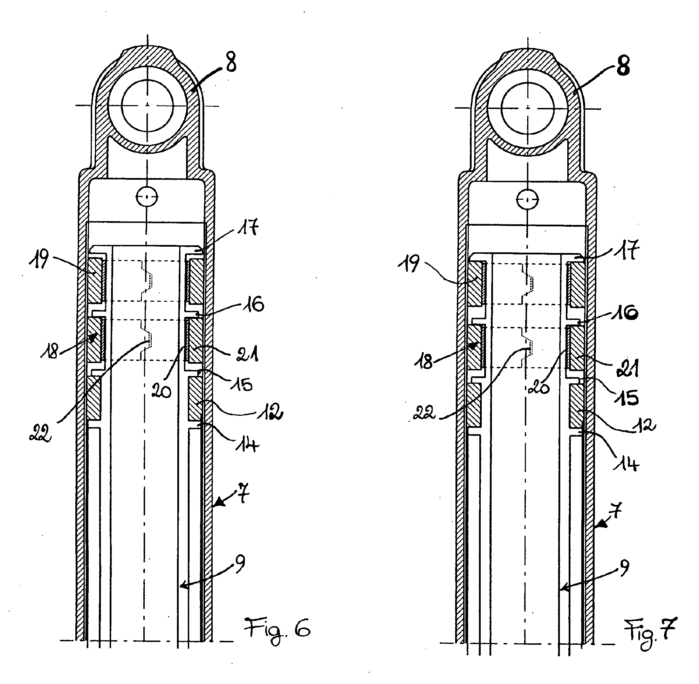

In the herein described embodiment, for instance, around the piston 9 there is mounted at least an additional friction member 19 that is aligned axially with the members 12, 18 and is adapted to make friction with respect to the surface 13 of the cylinder 7. In particular, the friction member 19 is freely slidable with respect to the piston 9 along an axial length B (Figure 5) thereof that is defined by two mutually opposing shoulders 16 and 17 of the same piston.

In the example being described, the axial length B is greater than the axial length A, but those skilled in the art will be readily capable of appreciating further on in this description that, depending on the varying needs and requirements, there may also arise a condition B = A or even B < A, or again a combination of such conditions in the case in which the use of further sliding friction members similar to the members 18 and 19 is envisaged. In any case, all additional friction members will preferably have a structure similar to the one of the afore described friction member 18, that will enable them to be most conveniently and quickly assembled and/or disassembled, along with an equally reliable and noiseless operation.

In the example being described, the operation of the differential shock-absorber strut is as follows.

Let it be assumed that the stresses, which the shock-absorber strut is subject to, tend to cause the piston 9 to be displaced upwards when the same piston is in the condition illustrated in Figures 3 and 7, ie. with the sliding friction members 18 and 19 in their upper end-of-stroke position with respect to the piston 9.

Initially, the stroke of the piston 9 will be braked by the friction that is exerted, with respect to the inner surface 13 of the cylinder 7, solely by the friction member 12, which is firmly joined axially with the piston itself. During this initial displacement stroke of the piston, in fact, the additional friction members 18 and 19 keep their axial position with respect to the cylinder 7, while on the contrary sliding with respect to the piston 9 thanks to their self-lubricating inner layer 20.

If the displacement of the piston 9 is greater than the axial length A < B, after a stroke of the piston 9 equal to the same axial length A, the shoulder 15 will axially drag also the friction member 18, whose friction with the wall 13 of the cylinder 7 will therefore add to the braking effect of the friction member 12. On the contrary, the additional friction member 19 continues to keep its axial position with respect to the cylinder 7, while still sliding with respect to the piston 9 (Figure 4).

If the stroke of the piston 9 is also longer than the axial length B, at a certain point (Figure 5) the shoulder 16 will also drag axially the friction member 19, whose friction against the wall 13 of the cylinder 7 therefore adds to the braking effect of the members 12 and 18.

When the mechanical stresses, which the shock-absorber strut is subject to, tend to displace the piston 9 towards the original axial position illustrated in Figure 7, the downwards displacement stroke of the piston 9 will be braked initially by the friction that is exerted, with respect to the inner surface 13 of the cylinder 7, solely by the friction member 12, which is firmly joined axially with the piston itself. During this initial displacement stroke of the piston, in fact, the additional friction members 18 and 19 keep their axial position with respect to the cylinder 7, as shown in Figure 5, while on the contrary sliding with respect to the piston 9 thanks to their self-lubricating inner layer 20.

After a stroke of the piston 9 equal to the same axial length A (Figure 6), the shoulder 16 will drag axially also the friction member 18, whose friction against the wall 13 of the cylinder 7 will therefore add to the braking effect of the friction member 12. On the contrary, the additional friction member 19 continues to keep its axial position with respect to the cylinder 7, while still sliding with respect to the piston 9.

Thereafter, the shoulder 16 will at a certain point (Figure 7) also drag axially the friction member 19, whose friction against the wall 13 of the cylinder 7 therefore adds to the braking effect of the members 12 and 18.

Conclusively, the wider the elongation of the shock-absorber strut 7, 9, the stronger will be the braking or damping force thereof, and such a variation of the braking force occurs at discrete levels, in accordance with the number and the mechanical characteristics of the friction members 12, 18, 19, as well as the extent of the axial lengths A and B as defined by the shoulders 15, 16 and 17.

Since a quite high number of friction members similar to the afore described members 12, 18, 19 can actually be aligned axially around the piston 9 without altering the overall size of the shock-absorber strut, the latter can be most easily made to produce a braking or damping force that varies at will, in a in the most desirable manner, so as to most precisely react in response to the most varied operating conditions that may be encountered in practice.

Furthermore, considerable braking forces can be obtained with the use of just a limited number of component parts, since - unlike the prior-art solutions as known from example from the afore mentioned EP-A-0 301 190, in which the various friction members are provided to act alternatively in response to produce different braking forces - according to the present invention the friction members 12, 18, 19 are provided to actually work, ie. act in series.

In practice, according to the initial position of the cylinder 7 and the piston 9 (which may actually differ from the one described by way of example), one or more friction members 18, 19 will only act in series with the main friction member 12 when the piston 9 is caused to displace, with respect to the cylinder 7, by a corresponding axial length that is in excess of a pre-determined value, that latter not exceeding the afore mentioned axial lengths a, B. respectively.

It will be appreciated that the above described differential shock-absorber strut may be the subject of a number of modifications without departing from the scope of the present invention.

So, for example, although the described shock-absorber strut is preferably used in a clothes washing machine, it shall be readily understood to be capable of also finding proper use in other, different applications, according to the needs.

## Claims

1. Differential-type shock-absorber strut, in particular for clothes washing machines, comprising a cylinder (7), in which a piston (9) is provided slidably under interposition of at least a main friction member (12) and at least a further friction member (18;19), **characterized in that** said main friction member (12) is firmly joined axially with said piston (9) so as to make friction against said cylinder (7), and said further friction member (18; 19) is mounted on said piston (9), substantially aligned axially with said main friction member (12), in a freely slidable manner with respect to the piston (9) along a respective axial length (A; B), so as to be able to make friction against the cylinder (7), in series with said main friction member (12), solely when the piston (9) is caused to displace with respect to the cylinder (7) by a corresponding axial length exceeding a pre-determined value, the latter not exceeding said respective axial length (A; B).

2. Differential-type shock-absorber strut according to claim 1, **characterized in that** said axial length (A; B) is defined by two mutually opposing shoulders (15, 16; 16, 17) of said piston (9).

3. Differential-type shock-absorber strut according to claim 1, **characterized in that** said further friction member (18; 19) has a composite structure comprising a first layer (20) of self-lubricating material adapted to co-operate with said piston (9), as well as a second layer (21) adapted to make friction with respect to said cylinder (7).

4. Differential-type shock-absorber strut according to claim 1, **characterized in that** said further friction member (18; 19) has substantially the same outside diameter as the main friction member (12).

5. Differential-type shock-absorber strut according to claim 1, **characterized in that** said further friction member (18; 19) has a substantially annular split and elastically deformable structure, so as to be able to be mounted transversally in position on the piston (9) with a simple elastic opening-out and passing-over, ie. snapping-in operation.

6. Differential-type shock-absorber strut according to claim 1, **characterized in that** there are provided at least a first one and at least a second one of said further friction members that are capable of freely sliding with respect to the piston (9) along respective axial lengths (A; B) differing from each other.

7. Differential-type shock-absorber strut according to claim 1, **characterized in that** there are provided at least a first one and at least a second one of said further friction members that are capable of freely sliding with respect to the piston (9) along respective axial lengths (A; B) that are equal to each other.

8. Differential-type shock-absorber strut according to claims 1 to 3, **characterized in that** said first layer (21) of the friction element (18; 19) protrudes axially with respect to said second layer (20), so as to be effective in damping the friction member striking against said shoulders (15, 16, 17).
